# EUROPEAN PATENT SPECIFICATION

(11) **EP 1 477 056 B1**
(45) Date of publication and mention of the grant of the patent: **26.10.2005**
(21) Application number: 03015786.1
(22) Date of filing: 10.07.2003
(51) Int. Cl.: A01K 5/00, B65D 1/16, A01K 7/00, A01K 7/02

(54) **Pet drinking jar for receiving and opening a closed beverage can, such closed and filled beverage can and unit for complementing a drinking jar**
Tiertrinkbehälter zum Aufnehmen und Öffnen einer geschlossenen Getränkedose, eine solche geschlossene und gefüllte Getränkedose und eine Einheit zum Ergänzen eines Tiertrinkbehälters
Récipient destiné à boire pour animaux adapté pour recevoir et ouvrir une canette de boisson fermée, cette même canette fermée et remplie de boisson et une unité étant de complément du récipient pour boire

(43) Date of publication of application: 17.11.2004
(73) Proprietor: Ball Packaging Europe GmbH, 40880 Ratingen (DE)
(72) Inventor: Bast, Bertold, 53117 Bonn (DE); Driessens, Jan, Maastricht 6221 EN (NL)
(74) Representative: Leonhard, Frank Reimund

(56) References cited:
- EP-A- 0 337 500
- EP-A- 1 281 660
- GB-A- 320 215
- US-A- 4 267 945
- US-A- 4 573 434
- US-A- 6 077 554

## Description

The invention concerns a pet (animal) drinking jar and a can for holding liquid. A drinks dispensing portion is designed to receive a beverage can with a front end portion downwards, said beverage can containing as a beverage one of an animal refreshment, a health drink and a nutrition drink. A drinking portion comprises an open top to allow an animal to access the beverage.

### Background.

The pet food market is well served with a variety of foodstuff or portioned foodstuff packed in three piece cans and other package means for providing pets with suitable meals at home or out of home, i.e. while travelling. A major design requirement for such packages is the handling convenience for the pet holder. Convenience typically comprises lightness and unbreakable property of the containers and easy access to the content.

Totally underrepresented in the packaged pet food market are products to satisfy the pet's drinking desire. Refreshment means for the animals are usually limited to serving them water, either from tap or large size bottles. Health & nutrition drinks and such for replenishment of energy etc. are not being offered.

These products would represent a meaningful food complement. Such drinks should preferably be offered in convenient, handy packages, just like the solid food packages. Therefore, single serving sizes are important to prevent contained vitamins and trace elements from deteriorating.

From **US-A 4,573,434** (Gardner) there is a system known, which substantially corresponds to the preamble part of claim 1. In this reference a drinking jar system for animals is disclosed which automatically provides water. A bottle is turned upside down and is inserted with a neck portion into a receiving part of the bowl of the system and a flow control means acts as level control for the drinking portion of the bowl system, cf. said document in column 3, lines 30 to 40. A similar watering system for birds is known from **GB-A 320,215** (Pickering), having a bird fountain disclosed and a water space, which allows centrally stored water to emerge into a circular receiving ring, to which birds have access with their beaks. The level in this toroidal drinking section is kept at constant, cf. said document on page 1, left column, lines 1 to 18. **EP-A 1 281 660** (Alpes Concept) separately discloses an opening system, having different latitudes of cutting, when pressing through a metal device (dispositif perforateur de bouchon de conteneur de liquide), cf. figures 2a, 2b and 2c in said document.

### Summary of invention.

**A purpose of the invention** is to overcome the aforementioned drawbacks in pet feeding. A drinking jar system as defined in claim 1 is easy in operating and with an easily obtainable refilling, having substantially no spillage of liquid upon serving or preparing.

A further object of the invention is to provide a suitable and convenient packaging means for holding such drinks, receiving it into a pet drinking jar and featuring the combination with a means for clean and reliable opening of the packaging. This is achieved by a level controlled dispensing of the container content into the drinking jar provided with an opening device acting on the lid of the closed can when inserted in the dispensing part of the jar (claim 1).

The packaging means for use with the animal drinking jar is a two-piece metal beverage can as it is commonly used in the human drinks business, but having a closed, non-scored top end. The entire device of the invention is still capable of receiving any kind of beverage can format commonly used in the beverage industry.

A DWI beverage can with a domed bottom, a thinner wall and a lid, seamed to an upper wall end, is a well proven package which owns all of the important attributes, i.e. safe product holding due to superior barrier properties and convenience in handling, like easy access to the content and lightness as well as an excellent billboard for marketing information. However, the pet drink container of the invention does not have the commonly used, lever assisted, easy open end (e.g. SOT - stay on tab, LOE - large opening end, et al.) but a design which will open by simply inserting the can's front portion into the pet drinking jar section called the "dispensing portion" (claim 3, claim 11, claim 19). This is well prepared by prior technical design of the can. When in use, it prevents accidental mixing with beverage packages for human consumption. Such measure is for consumer, especially children's, protection.

The dispensing portion receives the front axial portion containing the lid or end of the can, which is scheduled for opening by the cutting or opening device (claim 3, claim 4). The dispensing portion holds a substantially even/flat vertical wall (claim 6) which is adapted in diameter with respect to the beverage can as described. This wall serves for orientation and lateral supporting of the inserted front portion of the can, the remainder of which is freely exposed and unguided.

The can is inserted upside-down and during insertion, the opening device acts on the closed lid, to open only a portion of this lid (panel). Through this opened portion, the content of the can emerges from the can and is received by the "level control drinks dispensing portion", which serves for stopping a further flow of the liquid, when a certain level of this drink is reached (claims 5, 21, 25). This level is controlled by the drinking portion which is connected through a walled passageway, such as a "channel", pipe or duct or open top trench (claims 1, 7, 34), between the dispensing portion and the drinking portion. By way of "communicating pipes", the level on both sides of the at least partly walled passageway is substantially the same and when the level in the drinks dispensing portion reaches the seam of the can, a seal (hydro seal) closes further air supply into the can and thus stops further emerging of liquid by a building-up vacuum inside the can. The dispensing to the drinking portion through the channel or trench as walled passageway is interrupted until an animal takes out liquid from the drinking portion which is open at the top, to allow said animal to access the beverage over a large surface. Reducing the level of the drinking liquid in the drinking portion, disturbs the steady state of the two equal levels on both sides of the communicating passageway and acts to further supply liquid from the can, when the seal of the liquid touching the seam is opened and the level of the liquid in the plenum (claim 23) is below the seam, allowing air to move into the can again.

A unit, self-contained for use with a standard jar has a dispensing portion and an opening as well as an attachment device, for placing it in all known animal drinking jars. The dispensing portion may have the level control means, which operates in a similar way. Into a cylindrically walled portion, the front portion of the can is inserted (upside down), the can is opened by the opening device. Terminating the opening action, the seam of the can is stopped by the support means which belong to the level control. Locating the seam onto the upper level of the support means prepares the can for a hydro seal, when the level in the drinking jar reaches the level of the seam of the can. Further supply of liquid is then interrupted. In this situation, the liquid is filled into the jar and the attachment device, preferably having at least one suction pad, is fully surrounded by liquid. The attachment devices still keep the self-contained unit fixed in local relation to the jar, where it was applied.

To provide for such level control in the jar or the self contained unit, bottom supports are provided on which the seam rests, when the can is put upside-down into the dispensing portion (claim 5). This receiving buffer chamber is a plenum (claim 17, 21, 23 as well as 25), extending between the inserted lid and a bottom wall of the dispensing portion, surrounded by said cylindrical wall, which receives the front portion of the can (claim 6).

The bottom support is designed to stop the front seam end of the can from further moving downwards when the can is pressed onto the cutting and tearing device for opening a part of the lid (claim 11). These bottom supports have an upper level, which in the inserted state of the can is level with the bottom end of the seam (claims 10, 23, 24). The support portion may be designed as a ring or as several circumferentially spaced studs which protrude from said bottom of the receiving portion of the jar system (claim 10).

Directed into the dispensing portion there is a gap for supplying air near to the bottom of this portion (claim 6). The supplied air is provided for steadily compensating the steady outflow of beverage as long as the level of the beverage in the drinking portion has not yet reached the final steady state level. Having reached this final level, the air supply is (automatically) cut off. This cutting off is achieved by blocking at least a part of the flow path for the air, which streams along the path as "air supply path" as long as it is not interrupted. The air supplying gap which is providing this, is preferably located higher than the finally reached level, having the drinking portion filled to its steady state final level. This is the "second state" of the jar system, when the air supply through the gap is interrupted (claim 35). The "first state" of the jar system is, when the air supply is active and there is a flow path ending near the bottom of dispensing portion.

The guiding of air can be achieved by a circumferential gap (claim 7), which is around the inserted can. It can also be achieved by the upper part of the trench, which is provided as a gap between both portions for drinking and dispensing. The communication path for the liquid is open to the top and serves in the upper part for returning the supplied air near to the bottom of the dispensing portion, whereas in the first state the bottom of the trench is used to allow a flow of beverage into the drinking portion (claim 34). Other measures may be taken for supplying air in the first state of the system, e.g. at least one hole placed higher than the steady state filled level of the drinking portion.

Providing this serves for a steady flow-out of the beverage, when the can is inserted and opened.

To enhance stability and vertical direction of the can, when inserted, the cylindrical wall may extend further up by an additional lateral holding portion (claim 7). This may additionally serve for protecting from a sharp upper cutting edge of the opening device, attached to the bottom of the drinks dispensing and can receiving portion.

The bottom support for resting the can is not circumferentially continuous, to allow fluid to emerge through spaces between support surfaces and the seam of the inserted can. Additionally, the opening device may itself have lateral (radially directed) opening portions or a slit portion, to allow emerging of liquid after opening only a part of the can lid.

The opening portion is fairly small compared to the size of the lid (claim 17) which substantially corresponds in diameter to the opening portion for receiving the beverage can (claim 6).

Still the can, when inserted, has a stable and well-supported seat within the cylindrical wall of the dispensing portion. The momentums for holding the upside-down can are large compared to the diameter of the can, which is exposed above the cylindrical receiving portion and therefore unseated or unsupported there. Supporting forces and lateral holding forces will only be provided via the front axial portion of the can, but still this provided force is sufficient with respect to the cylindrical can to keep the can in its seated position, even in such circumstances, when lateral forces accidentally hit the can wall.

The opening device has a suitable design to enhance the opening action and to reduce the forces of pressing the can into the cylindrical seat of the dispensing portion (claims 11, 13, 14, 18, 20). It has an at least partly curved top cutting portion (claim 13), extending from the tip downwards. This cutting portion acts like a knife cutting through the sheet of the lid, when inserted into the receiving portion. As the angle of inclination of this cutting portion increases (claim 14), the cutting force is at maximum at the time of piercing through the can lid with a steep and sharp tip and continues to be lowered until a portion of the opening device is reached which has no cutting edge, but a pushing edge, which is non-cutting but tearing the sheet metal. It acts like a blunt pusher, tearing substantially along the line, along which the blade has previously cut through the tin, but pushes the open portion into the can by bending it into the can and therewith allowing a larger opening, which is not blocked by a lid portion (claims 11).

This is comparable to an action a user may take when tearing an opening portion out of the lid or when pressing an opening portion into the can by using an axially directed force, not only tearing the lid portion along a scoring line, but also hinged moving the lid segment axially into the can.

Both actions of cutting and pushing the lid segment into the can by bending it are performed by the opening device, provided near the bottom of the substantially cylindrical receiving wall in the dispensing portion of the jar.

Special design for the change of inclination and the initiating and ending angle may be used (claim 15 to 17). The cutting edge in other words is steeper in the beginning and becomes less steep, when it approaches the non-cutting portion of the opening device.

To further enhance the removal of the can and the forces necessary to remove the can from the opening device, it may have a shape in which it's substantially tubular shape has a slanted wall towards the inner axis to have a larger diameter on the base than on the top of the opening device (claims 30 to 32). The sharp cut edge of the lid opening does not slide nor block at the opener's outer surface when the can is being removed. From the first initial piercing into the lid until the removal of the emptied can, easy operation as well as a reduction of potential injuries is available. The opening of the can is provided by an esthetical cutting, a clean cut edge is provided, a fully emptying is achieved and the lid segment stays hinged to the remaining lid through a bent portion, minimizing a danger of injury. Provided therewith is a clean, convincing operation with full physical effect of gained achievements.

To enhance flow through the communicating passageway, the bottom of the receiving portion may be designed with a slope (claim 26), continued through either the bottom of open top trench (claim 8) or a channel pipe.

The whole jar may be covered by a hood, which clamps near the bottom of the jar, to allow carrying the jar and the hood together by means of a handle (claims 27, 28). The system as such may be made of steel, painted or stainless, as well as aluminum or plastics. The hood is made preferably of plastic material.

The beverage can used with the jar does not provide for an opening system attached to the lid, the lid itself may also be made from thinner sheet, as no mechanical operation is done to the lid, except the seaming of the shell to the wall of the body. Preferred therefore is a lid made of steel. Decoration may be provided upside down as the can is used. Preferably, pictures of animals are shown on the decoration of the can.

### Brief introduction to the Figures.

**Embodiments** are meant for supporting and enabling the invention.
- Figure 1: is a side view in vertical section of one example of the jar system, when a drinks can 1 is inserted into the dispensing portion 2, which communicates by a channel 7 with a drinking portion 3, open to the top.
- Figure 2: is an enlarged view of the portion identified in Figure 1, shown in vertical section and lining out in more detail the dispensing portion [2] providing the opening of the can which is identified 50 in Figure 1, and the level control which is identified by the level height L when compared to the base level L0, as is the bottom wall 3b of the drinking side 3.
- Figure 3: explains a further embodiment of the dispensing portion [2].
- Figure 4a: is an enlargement of an opening device 8 in a side view and applied to a bottom 6b of the dispensing portion of Figure 3.
- Figure 4b: is an opening device 8 when applied to a bottom 6b according to Figure 2.
- Figure 5: is a schematic view of assembling an opening device 8, and a bottom support 12 into the dispensing portion 4.
- Figure 5a: displays a side view of a preform of an opening device 8 when in a flat condition.
- Figure 6: displays an alternative way of assembling using a different opening device 8*.
- Figure 7: is a sectional view of a self-contained unit for attaching to a standard jar. The can is shown in phantom, how it would be placed into this device, when opened.
- Figure 7a: is a bottom view of the self-contained device as shown in Figure 7, in a perspective view, assembling suction pads [15] to the lower side of the bottom wall 6b.
- Figure 8: is a plan top view of a further example of the jar system, embodying a gap as a trench 7a between the dispensing portion 2 and the drinking portion 3, open to the top.
- Figure 8a: is a side sectional view of a further embodiment, having a trench 7a, which has a bottom portion starting at the lowest end of the bottom 6b of the dispensing portion and directed in a sloped manner to the bottom 3b of the drinking portion.

### Detailed description of the embodiments of the invention.

The entire device comprising components, which act as a functional system fulfilling all of the requirements needed for the purpose of the invention.

The components are individually explained, but may be used in arbitrary combination.

A pet drinking or feeding jar is designed to provide an integrated structure for housing the cylindrical can 1 in a cylindrical can receptacle 4. An opening mechanism 8 and the dispensing 7 and level control volume 6 are provided. The jar design allowing a maximum of shape and contour freedom and holding the can receptacle, the opening mechanism and the dispensing and level control part, all serving the purpose of the invention.

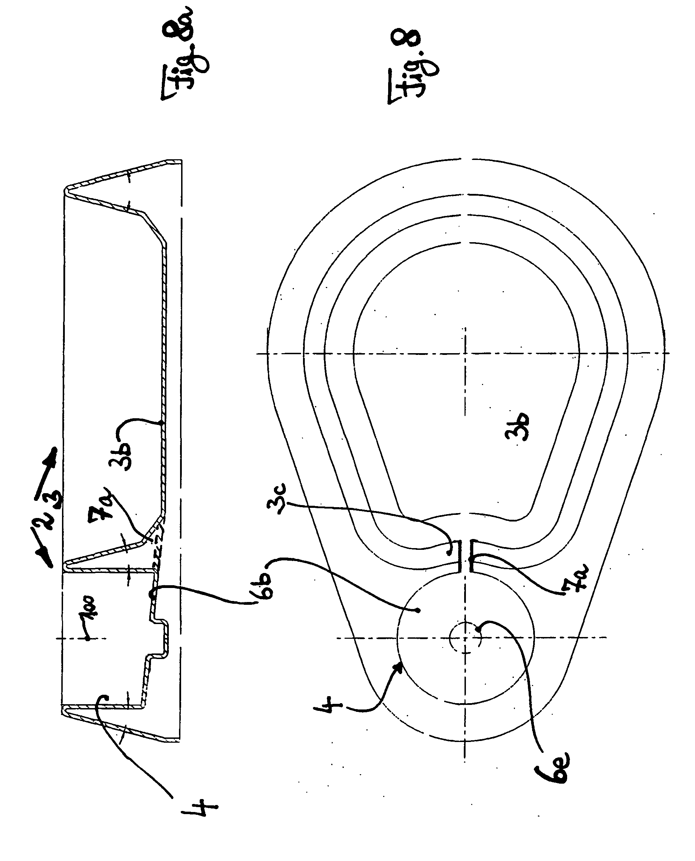

A shallow bottom jar of sufficient size, as commonly used for pet feeding, may as well be used in which case the functional components for holding the can, the opening mechanism and the dispensing and level control part are provided as a self-contained unit according to **Figures 7, 7a** featured with a fastening help such as at least one suction pad 15a, 15b, 15c at its base for fixing the unit to the bottom of the jar.

Anyone of the three designs (new, a redesign and a supplemental unit) meets the expectations set by the purpose of the invention.

A standard two-piece metal beverage can 1 holding a drink 1a which may be one of a variety of kinds. Fitting can formats are all of those being on the market today. They include, but are not limited to, body diameters ranging from "211" size (66 mm) down to "200" (50 mm) with neck diameters 202 (52 mm) or 200 (50 mm) and fill volumes between 150 and 568 ml, and other sizes, when an appropriate diameter adapter is being used, whereas any can height may be used with the jar system without the need for using a can height adapter.

The standard two-piece metal beverage can 1 may be the type as commonly used for passive packaging of "single serve" human drinks with or without additional external features attached to it.

The two-piece beverage can 1 may also be featured with - non-displayed - internal provisions placing the package into the category of "active packaging" by use of multi-compartment concepts. Exemplary applications use single or multi-compartment can inserts, known as "widgets", "wedges" (floating or fixed), "fresh can" and others, that self-open at the time of opening the can in preparation for consuming its content.

Mechanisms achieved by such features are mixing of compartment contents, adding ingredients, agitating the fill product, or heating or cooling it.

A standard can end 1b (the lid) of reduced design, is characterized by the absence of any score lines and opening mechanism as applied to standard beverage can ends known on the market.

The can end 1b is to fit the chosen (reduced) can neck diameter. The can end may be made from organically coated steel, uncoated tinplate or organically coated aluminium. The organic metal coatings may be based on thermosetting or thermoplastic resins. The can end coatings may be with or without tinting or pigmentation.

The can end metal thickness may range between 0.12 mm and 0.28 mm in case of a steel end (lid) and 0.15 mm and 0.35 mm for an aluminum end (lid).

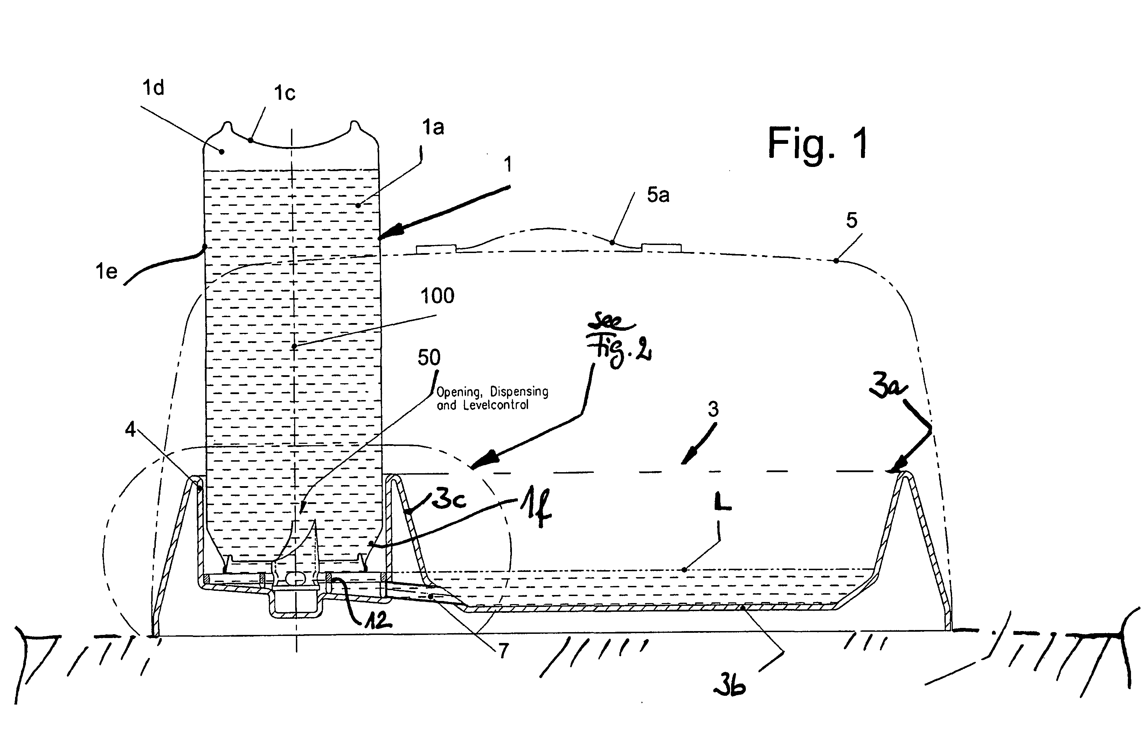

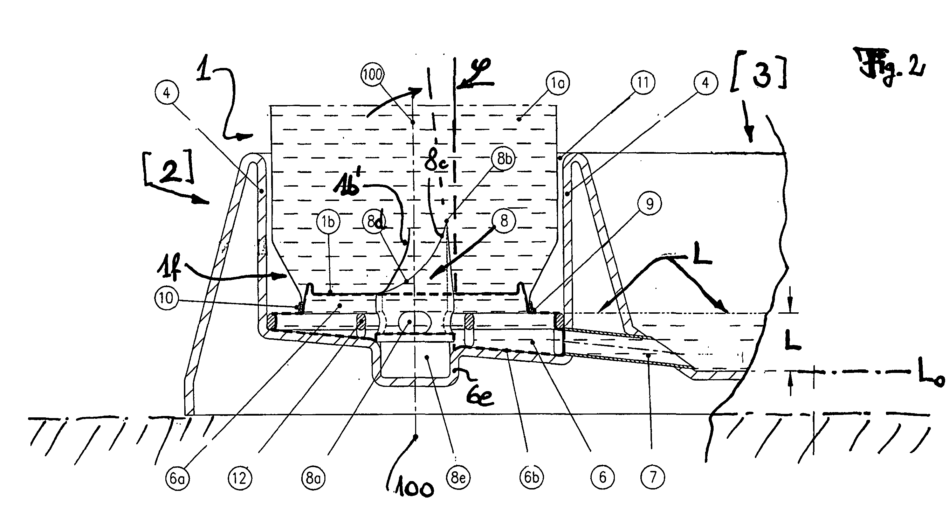

The displayed can 1 as explained above is shown upside down, when already inserted according to **Figure 1** into the dispensing portion 2, having the receiving portion 4 which is a cylindrical wall, adapted to the diameter of the can, for receiving the front part, which is close to the lid 1b. More detailed, the front part 1f is shown in Figure 2. The back end of the can, which is the bottom end of a regular can, is domed 1c, leaving a head space 1d between the upper level of the liquid 1a and the inside surface of the bottom of the can. The regular top of the can is inserted into the receiving portion 4, where it is displayed that the can has a lid 1b, having a surrounding groove and a seam 10 which would regularly be a double seam, seaming the can lid - having the panel portion and being constituted without any opening system attached to it (shell) - to the necked-in portion of the can wall 1e. The wall 1e and a domed bottom 1c result from the manufacturing of a DWI-can, having a greater wall thickness in the bottom 1c and a reduced wall thickness in the lateral wall portion 1e due to the manufacturing process.

When the can is purchased by the user, the outside decoration of the can (placed within the surface extension of the previously addressed billboard) may present anything that is related to animals and use for such animals. The outside decoration may be upside down, to have a picture presented in regular orientation, when the can is inserted into the receiving portion 4. This may also be the way of displaying it in the shelf of a store, still allowing stacking of the containers, their lids directed downward.

Opening of the can (generally 50) for gaining access to its content is performed by a separate opening device 8 which is integrated into the entire dispensing device 2, 4, when the can is pushed into the receiving portion 4, opening and dispensing part of the liquid to the drinking jar portion 3a through a channel 7, shown as a pipe in Figure 2.

The can end opening device 8, made from ceramics or metal in part or in total, is provided in the base 6b of the can receptacle 4, which is part of the entire pet drinking device. The can end is opened by introducing the can in upside-down orientation into the can receptacle and then pushing it further to meet and protrude over the can end opening device for breaking into the end panel and generating an opening portion (as a lid segment), allowing the can content to exit the can. The opener 8 has a bent, preferably circular blade for cutting into the can lid 1b, the blade being designed to have a peak portion 8b to reduce the force for breaking the lid, as shown in **Figures 2, 4a and 5.**

The can opening device 8 comprises of a tubular part ending in an upper edge sharpened and extending with a declining angle of between 10° and 80°, preferably between 15° and 70°, referring to the centre axis 100 of the tubular part 8. The angled portion at the upper acting end of the tubular part may extend along the entire circumference of the tubular part or over any fraction (of the cross-section) with the remaining portion containing different shapes to clear away from the tip and the cutting blade of the tubular part.

The cutting end of the tubular part 8 is facing towards the panel of the can end 1b and centres by match of its centre axis 100 with that of the opening panel of the can end. The middle of the tubular part 8 contains window-like lateral openings 8a allowing the liquid product to exit the can. The can-opening device is also fixed to the base 6b of the device, as will be explained later.

The tip 8b of the angled portion of the tubular part 8 serves the purpose of applying a perpendicular force to the can end 1b for opening. Opening of the can end is performed by means of pushing the end panel axially towards the tip of the stationary angled portion of the tubular part. The resulting force between the tip and the opening panel of the end breaks the end panel by cutting through the metal. By doing this, it opens a portion of the can end. Continued axial downward movement of the can makes the opening panel penetrate over the stationary tip while the tip protrudes into the can. It continues to cut the segment 1b' of the panel leaving a sufficient opening in the can end at the end of its travel, when the double seam 10 is meeting the can receptacle's base as spaced studs 13 or grid 12 (their upper level). Based on the principle of the "inclined plane" the tip contour pushes the opening panel into the can during its travel.

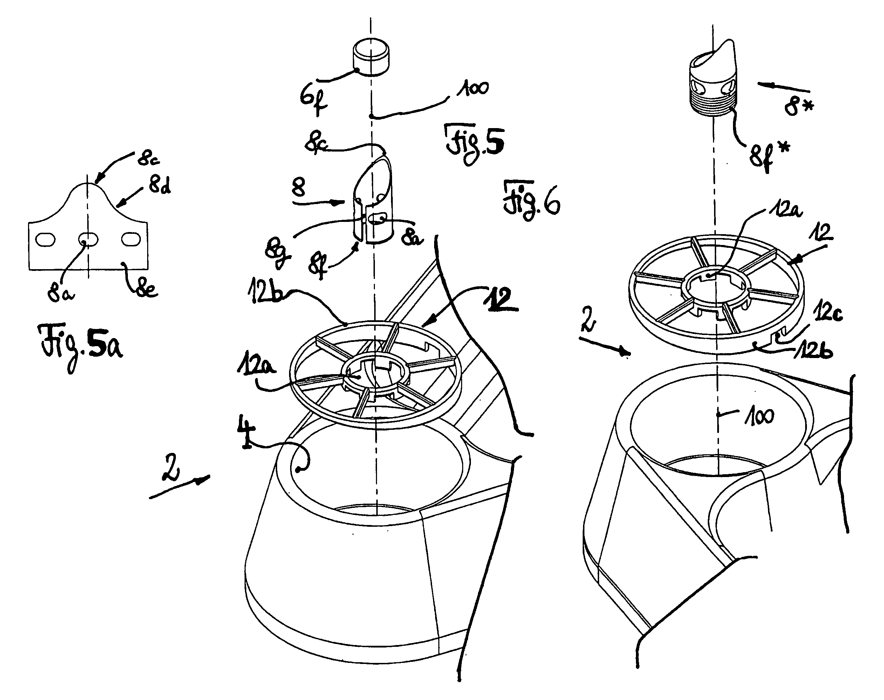

The end of the travel is displayed in Figure 2 when the segment 1b' is protruding more steeply into the inside of the can and having a smaller angle of inclination than the cutting edge at the plane passing through the axis 100. This originates from a pushing portion 8d, which is displayed in Figures 4a, 4b. This pushing portion is below the cutting portion 8c, tearing the lid along lines, which continue the cut lines of the cutting upper edge 8c, but using tearing, thus pushing the opening segment 1b' steeper into the can by applying axial forces onto it. This enables enlargement of the opening window, through which the liquid may emerge from the inside of the can. It will flow through the axial channel the tubular opening device 8 provides and through the windows 8a, which may be spaced apart circumferentially and provided in an about middle portion of the opening device 8, but the liquid may as well emerge from slit 8g, when the opening device is not fully circumferential as shown in Figure 5.

The bottom or base portion of the opening device is fixed into a socket 6e which is provided as cylindrical depression in the slanted bottom 6d of the receiving portion 4.

Several embodiments may be provided for the opening device. One device is shown as circumferentially bent or rolled plate which is displayed in a flat condition in Figure 5a. This shape having the openings 8a above the base 8e and provides the cutting blade 8c in the top as a co-sinusoidal shape of the upper edge. The portion 8d does not have a cutting edge, but is blunt for tearing the segment 1b' and bending it along a hinge line into the inside. The flat shape is worked into a cylindrical form and will yield an opening device as displayed in Figure 5 as well as in Figures 4a, 4b. When preparing the flat shape of the opening device 8 worked round around a core or a mandrel, not separately shown, a conical shape of the wall may also be included. This will yield a substantially tubular shape, having a slit 8g, which is tapering. This slit is constituted between both free side edges as shown in Figure 5a. It may have a maximum extension between 3mm and 5mm and serves for a conical design of the opening device 8. The tapering towards the top is shaped to have an angle of between 3° to 10° against the axis 100. The diameter of the substantially tubular device in the base 8e is designed larger than the diameter near the top blade portion 8c, which, however, is not fully circular or circumferential, but only has a part circumferential blade portion. The tapered shape of this design is not separately shown in the figures, where a substantially cylindrical shape of this opening device is displayed, but the explanation given here is ment to read on the figures displayed to provide a further embodiment.

**Figures 4a, 4b** show the inserted position, when the base 8e is located in the depression 6e of the bottom 6b. A collar 8f is provided which serves for proper forces to attach this opening device correctly and constantly in an axial orientation. The inclination α of the tip and the continued cutting portion 8c is displayed in Figure 4b. The angle is steep, namely between 10° and 30°, preferably about 15°, referred to the axis 100 and will come down to an angle of about 60° to 80°, preferably of 70°, near the left displayed side end of the opening device as shown in Figure 4b. Approximately in the middle portion, near the plane passing through the axis 100 and being perpendicular to the plane given by the sheet on which Figure 4b is drawn, the angle is about 45°.

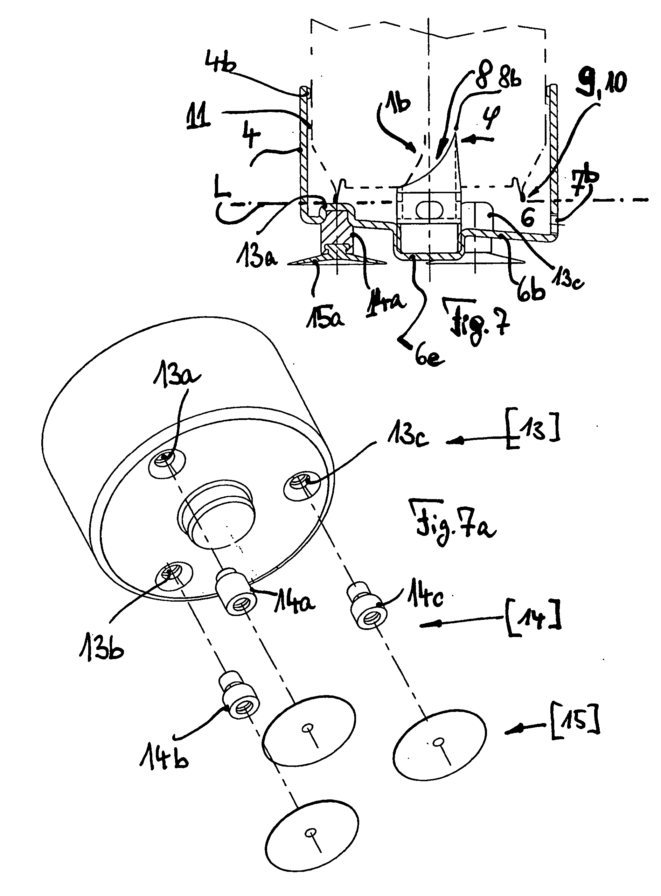

An alternative solution for the opening device 8* is shown in Figure 6. This is a non-bent, but solid device, having a thread 8f*, which is self-cutting and will grind into the depression 6e, displayed earlier. This is shown in Figure 2 as an example, also using the grid 12, which has two concentric rings 12a, 12b and star-shaped webs. The outer ring is shaped to follow the slope of the bottom 6b, and the inner ring will allow to pass the thread 8f* through the grid piece 12. The upper edges of the grid 12 define level L as will be explained later. A lateral window 12c is designed for being placed over channel 7.

To enhance the stability of the bent opening device 8 of Figure 5, an at least partly elastic plug 6f of cylindrical shape is introduced along axis 100 into the centre and below the lateral openings 8a, to allow a tight grip of the collar 8f into the lateral wall of the depression 6e. Apart from this enhanced force, the tapered shape of the opening device is maintained.

To ease the removal of an inserted and emptied can, the opening device 8 or 8* has slanted walls, as seen in Figure 2 and detailed in Figure 7 by using the angle ϕ. This angle is larger than zero, between 3° to 10° and indicates an inside tilted wall (tapered shape), for reducing the forces necessary to remove the cut edge of the panel from the outer surface of the cutting device 8 upon extracting the emptied can. The taper is preferably fully circumferential, but it may as well partly circumferential and the opening device may exhibit a vertical slit 8g.

The effective size and contour of the opening aperture achieved in the can end is crucial to the functionality of the entire device, as are other interacting vent and flow channels described elsewhere. The aperture is preferred to be above 3%, mainly around 5% (±20%), but also up to 20% of the available space of the can lid 1b.

A drink level control is provided to achieve controlled release of the fluid product from the drink container into the jar drinking portion 3 and allow for and maintain a shallow drink level L of predetermined height (level) in the drinking portion 3 above the bottom 3b of the jar until the container 1 is empty. This is to provide drinking convenience for the pet and to prevent excessive splashing and spilling during consumption.

In case of oxygen sensitive drinks, it also reduces the degree of oxidation of the drink that may be caused by prolonged contact of the drink with the surrounding air. Keeping a maximum of the drink for as long as possible inside the controlled environment in the can maintains longer freshness of the product before consumption.

The drink dispensing means 2 utilises the centred, substantially tubular opening of part 8 or 8* furnished with window-like lateral openings 8a along its about middle circumference to guide the fluid content of the can through a level control section at the lower end of the can receptacle 4 and from there through a communicating passageway 7 into the take-away (drinking) portion 3 of the drinking jar. The communicating duct as a channel 7 in Figures 1 to 3 is between the level control section and the take-away side of the jar, physically located at a level lower than the bottom rim of the double seam 10 fixing the can end to the can body, when the can is introduced upside down into the can receptacle 4 and resting on either distributed studs 13 or webs of a grid 12.

The passageway for communicating the liquid (drink or beverage) into the drinking portion 3 is in a further embodiment designed as a trench 7a, provided as a gap between both portions 4, 3. This is exemplified in Figure 8, where this trench 7a is provided in the wall segments 3c between both portions. This trench has an open top and a closed bottom, for communicating the liquid like an open top channel. This will later be explained with reference to Figures 8, 8a.

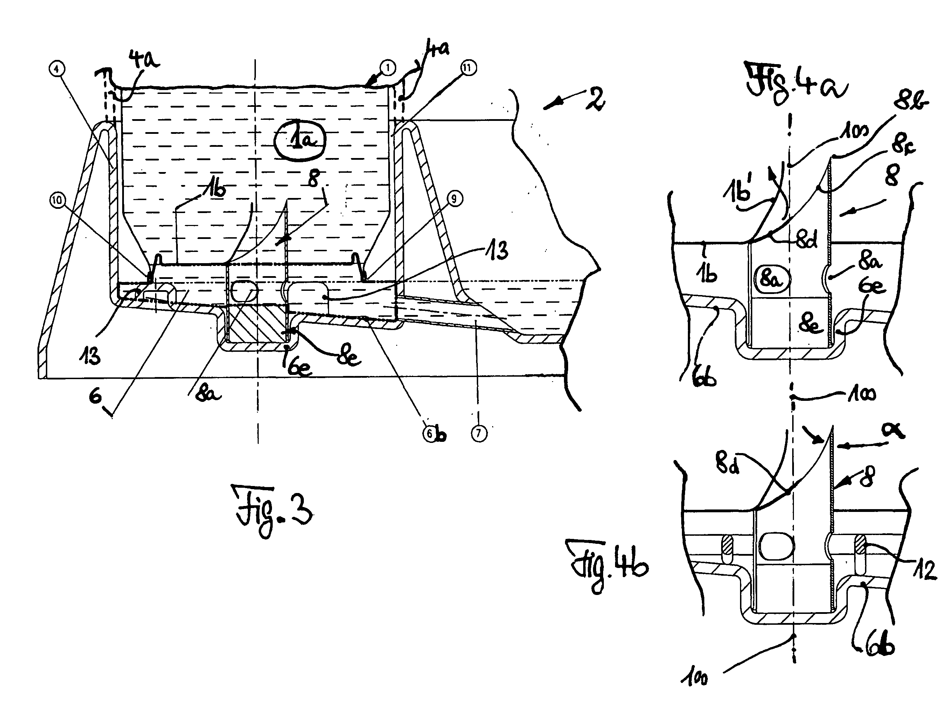

The further embodiment of the level control section is exemplified in the self contained supplemental unit of Figures 7, 7a, where the communicating duct is provided as an opening 7b in a lateral wall 4 of the receiving portion 4. This passageway may be present as a hole only, as shown in Figure 7. This hole may extend upwards to also provide a gap or trench in the lateral wall 4, having a bottom end and open to the top at the upper edge of the wall 4. This will be explained later, with reference to Figures 7, 7a. All these embodiments comprise level control sections, as now explained with reference to Figures 2, 3, the function of which may be read on all the other embodiments as well.

The level control section is represented by a cavity 6 determined between the bottom 6b of the can receptacle 4, the outer surface of the can lid (panel) and the bottom part of the tubular sidewall of the can receptacle. The inner diameter of the can receptacle is reasonably larger than the outside diameter of the can body to allow easy insertion of the can and to allow surrounding air to enter through a circumferential gap 11 into the level control section.

The dispensing process through the passageway 7, 7a, 7b is interrupted when the content flowing out of the can has filled the level control cavity 6 (the "plenum") to the level of the rim of the double seam 10 and thus cutting an airflow into the can by hydrosealing 9 the seam to the upper surface level L of either the upper edges of the grid webs or the level of the upper surfaces of the protruding studs 13, spaced apart and extending from the bottom surface 6b. A seal 9 stops the flow of air into the can, to maintain an underpressure in the headspace 1d near the can bottom end 1c.

The dispensing and level controlling mechanism is based on the combination of hydrostatic forces and vacuum forces inside the quasi-closed system. The ratio of the forces is chosen towards both sides of its balance to either allow product release from the can into the drinking jar or to cut the flow of fluid when a predetermined fill level L (above L0) in the drinking portion 3 is reached.

The drinking portion 3 is constituted by a surrounding wall 3c, inclined with respect to a vertical axis. A bottom 3b constitutes together with the surrounding wall 3c a well-portion, which is supplied with liquid through the passageway, below the level L which corresponds to the upper surface of the bottom studs 13 or the upper edges of the grid 12, as explained before. The well 3 is open to the top, indicated by 3a.

The cavity 6 is provided by two portions, a cavity portion 6a which is close to the lid 1b, and a cavity part, which is below the upper level, defined by grid/stud as explained before. The lower part of the cavity continues through the passageway which may be either open to the top as trench 7,7b or a closed pipe 7, connecting the dispensing and control portion [2] and a drinking portion [3].

The cavity acts as buffer storage and is displayed in Figures 2 and 3 with dashed lines.

The closed part of the system is represented by the can in upside-down position. The open part of the system is represented by the take-away side 3 of the drinking jar and the level control section of the can receptacle. Although, the can end being opened with the can in upside-down position no product discharge from the can will occur because the gravity force of the product and the vacuum force in the upper headspace 1d of the can are maintained in balance.

However, allowing air to flow into the can will reduce the vacuum in the headspace, and the hydrostatic product force (gravity force) will outperform the vacuum force causing the fill product to discharge from the can. This product flow will continue until the airflow into the can is terminated by the seal 9 at level L and slightly beyond until the balance of forces is re-established.

In the system shown in Figures 2 and 7 the air flow into the can is achieved by the path through the gap 11 between the can 1 and the can receptacle 4 continuing through the upper part of the level control section and through the can opening into the can. In the system according to Figure 8 or the modified system according to Figure 7 with a trench 7a, the flow of air is provided through the trench, not necessitating a partly circumferential gap 11 between the outer wall of the can and the cylindrical wall 4 of the receiving portion. The return flow of air then is provided above the communicating flow of a beverage along the bottom of the trench. This trench therefore supplies dual functionality, other than the split functionality of channel 7, 7b and air-stream gap 11.

The airflow and thus the product flow is stopped by a back-up effect of the fluid from the take-away portion 3 of the jar through one of the passageways 7, 7a, 7b and into the level control section up to the plane at the (bottom) rim of the double seam 10 of the can. At this stage the fill height at the take-away or drinking side of the jar (the shallow cup-shaped portion) is substantially identical to that of the rim of the double seam.

The product flow-rate of the system may be greater than the rate of drink consumption by the pet at the take-away portion of the drinking jar, if so desired. This will allow satisfying the pet's drinking desire relative to its drinking rate and drinking intervals. The drink level L will be maintained during times of drinking and pausing until the can is empty.

The flow-rate can also be set below the pet's drinking rate causing the pet to almost empty the jar before the predetermined filling level L in the jar is replenished at a low rate. A variation of the flow-rate can be achieved by use of distance pads for raising or lowering the tip 8c of the can lid opening device 8 or 8*.

To keep the circumferential gap 11 in Figures 1 to 3 and 7 inside protruding supporting studs 4b as shown in Figure 7 may be applied near the upper end of the cylindrical wall 4. This equally applies for the self-contained unit shown in Figure 7 as well as for the units shown in Figures 2 and 3. Further, there may be an upper axial extension wall 4a, extending further up the wall 4 which is shown in Figures 2 and 3, to enhance and support stability of the can as inserted into the receiving portion 4 on the dispensing part 2 of the device. The radially inside protruding studs 4b are missing in those embodiments, where an at least circumferential gap 11 is not provided for. This is in those designs, where the trench 7a in either the self contained unit according Figure 7 or in the drinking jar of Figure 8 supplies the air in one direction and communicates the beverage in the opposite direction.

With reference to Figure 7, the self-contained unit is explained, having the dispensing portion 4 as explained before, except that it is not shaped as a one piece part of a jar, but in a separate manner, having a free upper edge near the inwardly directed studs 4b, for laterally supporting the can. All functions and devices are applying equally for this design, except the opening 7b which may just be a hole or window, for releasing the liquid and filling it into a bowl of standard design until the level in this bowl reaches a level L which is shown by the upper surface of the protrusion 13a which supports the bottom end of the double seem of the can 1. This will then provide for a seal as explained before and identified with reference sign 9.

The protrusion 13a may be designed as several circumferentially spaced protrusions 13a, 13b, 13c and used in a dual way by including feet 14a, 14b, 14c in the corresponding bottom of protrusions 13a, 13b, 13c, which are designed as receiver portions when viewed from the bottom as shown in Figure 7a. The feet [14] continue into suction heads [15] which are fixed to the bottom of the jar, to be filled by the level control self-contained device of Figure 7.

The opening device 8, the angle of inclination of its cutting and tearing wall 8b, 8c, the attachment of this device in the depression 6e can be taken from the drawing of Figure 7 and its function may be taken from the prior explanation.

**Figures 8, 8a** show in top view and in a section a design of the jar system with a trench 7a as communicating passage way for liquid in one direction and returning air flow in the opposite direction, to keep the liquid streaming, until the level L as explained before, is hydro-sealing the cans' seam 10, providing a seal 9, to inhibit further flow of liquid and therewith return stream of air.

The trench 7a is vertically oriented, has a closed bottom and may have slightly tapered shape up to the top. It can be described by a deep extension and a small lateral width, open to the top and closed at the bottom end. The bottom end may continue into the slanted bottom wall 6b of the receiving portion 4 and it may be guided directly flushing into the bottom wall 3b of the drinking portion 3 of the jar system.

The trench is through at least one, preferably two, spaced apart walls 3c between the drinking portion and the dispensing portion. In Figure 8 the depression 6e is exemplified, for housing the opening device 8 and the lateral wall 4, which is cylindrically adapted for a shape of the can to be inserted here.

It is not displayed in Figure 8, how the can 1 is inserted in the downwards directed manner as shown, for example, in Figure 1. It is, however, appreciated that there is no substantial air streaming gap 11 necessary between the outer wall of the can and the inner surface of the cylindrical receiving portion 4, as the back air stream is provided through the upper part of the trench 7a. A remaining circumferential space is for fitting the can into the receiving portion.

The same trench may be embodied into a variant of Figure 7, which is not separately displayed. The hole 7b provided there in combination with the air stream allowing gap 11 may be modified, to either leave the gap or to remove the supporting studs 4b, to allow a closer coordination of can and receiving portion 4, but including the trench, which starts at the bottom opening 7b and extends axially along the whole wall 4. The trench may also be reduced here to have an elongated hole 7b, which is open at least partly above the indicated level L to allow the return stream of air, until that time, when the seal 9, 10 begins to operate.

Preferably, the opening 7b, an elongated opening (not separately displayed) or the whole trench (not separately displayed) begin near or at the lowest level of the bottom wall 6b, which is indicated to be sloped, to promote a fluid flow from the plenum 6, which was explained earlier. This plenum is the liquid contained in the buffer chamber, which is near, namely above the bottom wall 6b, and the measures for providing return air stream are designed to allow the air to stream near to the bottom 6b. Streaming air therefore is meant to reach near the bottom, into the plenum, until it is not completely filled with liquid and sealed along the rim 10, but is also meant not to allow an outflow of liquid, except there, where the opening 7b or any of the other embodiments of the explained passageway are provided for supplying the liquid into the drinking portion 3,3b.

It is again referred to Figure 1, showing the hood 5, which is less in height than an inserted can 1 and thus designed to take away and make the device with a dispensing portion and a drinking portion portable. The hood 5 may be designed of plastic material and have a handle 5a, for carrying the whole device. A clipping or snapping connection may be provided at the bottom surrounding end of the hood 5, for connecting it to the bottom end of the device 3, 2.

The position of the windows 8a of the opening device may in axial direction vary between the lid 1b and the bottom level, which is slanted along the bottom wall 6b. It may therefore be either above or below the upper level of the bottom support 12 or 13.

## Claims

1. **Drinking jar system** for animals, said system having
(i) a level controlling drinks dispensing portion (2;4,12,13,6), designed to receive a beverage can (1) inserted with a front end portion (1f,1b) downwards, said beverage can (1) containing as a beverage (1a) one of an animal refreshment, a health drink and a nutrition drink;
(ii) a drinking portion (3;3a,3b) comprising an open top (3a) to allow an animal to access the beverage when dispensed from said dispensing portion (2) into said drinking portion (3) through a beverage communicating passageway (7,7a), preferably a channel (7), between the dispensing and the drinking portion (2,3), **characterized in that** the dispensing portion has substantially cylindrical shape, open to the top, at least one bottom support (12,13) and having an opening device (8;8b,8c,8e;8*) with a blade, suitable for cutting through only a part of a lid (1b) of the can front end portion (1f,1b).

2. System according to claim 1, wherein the dispensing portion (2) has a receiving portion (4) adapted to receive a cylindrical beverage can (1) with no more than the front end portion (1f,1b) thereof, preferably no more than 50%, especially 30% of an axial height of the beverage can.

3. System of claim 1, having an at least partly circular cutting device, directed upwards.

4. System of claim 1, wherein the dispensing portion (2) has an upwards directed cutting device (8) for cutting through a part of a lid, a support portion (6e) housing a base (8e) of said cutting device, and a receiving buffer chamber (6) for a dispensed amount of the beverage.

5. System according to claim 4, wherein the communicating passageway (7,7a) is provided from said receiving buffer chamber (6) to said drinking portion (3).

6. System according to claim 1 or 4, wherein the dispensing portion has a substantially cylindrical shape (4) adapted in diameter with respect to a cylindrical beverage can, to leave a gap (11,7a) for supplying air near to a bottom of the dispensing portion (4), preferably into the receiving buffer chamber (6).

7. System according to claim 1 or 6, wherein the dispensing portion has a substantially cylindrical shape (4) adapted in diameter with respect to a cylindrical beverage can, to leave an at least partly circumferential gap (11) between the cylindrically shaped inner wall of the dispensing portion (4) and a wall (1e) of the beverage can, when inserted into the dispensing portion.

8. System according to claim 1 or 6, wherein the dispensing portion has a substantially cylindrical shape (4) adapted in diameter with respect to a cylindrical beverage can, and a trench (7a) is provided as the passageway or gap (11) between the dispensing portion (4) and the drinking portion (3;3a,3b) comprising the open top (3a), to supply beverage flowing in one direction and air streaming in the opposite direction.

9. System according to claim 1 or 2 or 6, wherein said dispensing portion has at least one lateral holding portion (4,4a,4b), preferably facing radially inward, for laterally supporting and keeping the adjusted position of the beverage can after having been inserted into the receiving portion (4) of the dispensing portion (2).

10. System according to claim 3, wherein said support (12,13) comprises a support ring (12a,12b) or several circumferentially spaced protruding studs (13;13a,13b,13c).

11. System according to claim 1, having an at least partly circular cutting device (8;8*) with two portions, for cutting through a relatively small part (1b') of the lid, the device comprising
(a) a blade part (8c) extending inclined from a top portion (8b) of the cutting device;
(b) a non-cutting remaining portion (8d) below the blade part and having a relatively blunt upper end, for pushing the lid part upwards and bending it into the inside of the can, during a part of a downward movement of the can, until resting on a support (12,13).

12. System of claim 1, wherein said dispensing portion (2;4,6,12,13) has a bottom wall (6b) and an opening device (8) protruding therefrom in an upward direction.

13. System according to claim 12, wherein said opening device (8) comprises an at least partly curved blade (8c), said blade extending inclined from a tip portion (8b) downward.

14. System according to claim 13, wherein the angle of inclination (α) of the inclined blade changes from a small angle to a large angle, the angle being referred to an axis (100) of said at least partly tubular opening device (8).

15. System according to claim 14, wherein said large angle of inclination is in the range of 60° to 80°.

16. System according to claim 14, wherein said small angle (α) is in the range of 10° to 30°.

17. System according to claim 14, wherein the change of angle of inclination of said blade (8b,8c) is substantially smooth.

18. System according to claim 13, wherein a lower portion (8d) is terminating the blade and clearing a cutting portion (8c) from a tearing portion (8d) of said opening device (8).

19. System according to claim 11, wherein said opening device (8,8*) is shaped and adapted to open the small part (1b') having 20% to 3%, preferably around substantially 5%, of the area surrounded by a vertical wall segment (4) of the dispensing portion, for receiving the front end portion (1f,1b) of the beverage can (1).

20. System according to claim 13, wherein said opening device (8, 8*) comprises no more than a partly circumferential blade as top cutting edge of a substantially tubular shaft of the device (8).

21. System according to claim 12 or 3, wherein said bottom support (12,13) has upper stop edges or upper surfaces provided at a first level (L) higher than a second level (L0) of a bottom wall (3b) of said drinking portion (3).

22. System according to claim 3 or 12, wherein said opening device has at least one lateral window (8a) below the blade portion (8c) for supplying fluid emerging from a partly opened lid to a plenum (6) below an upper end level of the bottom support (12,13).

23. System according to the preceding claim, wherein said lateral window (8a) extends above and below the upper end level of said bottom support (12,13) to supply fluid to a space (6) provided as the plenum between the can lid (1b) - when inserted - and the bottom wall (6b) of the dispensing portion.

24. System according to claim 22, wherein the plenum (6) continues through the passageway (7,7*) for supplying the fluid emerging from a partly opened lid to said drinking portion (3) at a level lower than the upper end level of said support (12,13) for a seam (10) of the inserted can.

25. System according to claim 12, wherein said dispensing portion further has a plenum (6) near the bottom end wall (6b) for receiving fluid emerging from a partly opened can lid (1b).

26. System according to claim 25, wherein said bottom wall (6b) is sloped towards the passageway (7,7*) between said dispensing and drinking portions (2,3).

27. System according to claim 1, having a detachable hood (5), surrounding and covering in a closed position both, the dispensing portion and the drinking portion.

28. System according to claim 27, wherein said hood has a handle (5a).

29. System according to claim 3, 4, 11 or 12, wherein said opening device (8,8*) is made at least in part of metal or ceramics.

30. System of claim 10 or 29, wherein said opening device (8,8*) being at least in part tapered (ϕ) or having a slanted wall, slanted towards an axis (100) of said opening device, to have a larger diameter at a base (8e) than at a top (8b) thereof, preferably having a taper angle of between 3° to 10° against the axis.

31. System of claim 30, the device (8,8*) having a substantially vertically oriented slit (8g), narrowing or tapering towards the top (8b).

32. System of claim 31, the tapering slit (8g) having a maximum width of between 3 mm and 5 mm.

33. System according to claim 1, wherein the two portions (3,2) of the system are made at least in part of painted steel, stainless steel, aluminium or plastics.

34. System according to claims 1 or 5, the communication passageway being shaped as a trench (7a), open to the top and having a closed bottom path.

35. System according to claims 1, 6 or 34, having an air supply (7a,11), adapted for conducting air into the dispensing portion and into an inserted, opened can (1,1b') in one state of the jar system, and for stopping air supply in a second state of the jar system.

## Patentansprüche

1. **Trinknapfsystem** für Tiere, das System umfassend
(i) einen Getränkeabgabe-Abschnitt mit Pegelstandskontrolle (2;4,12,13,6), ausgebildet zum Aufnehmen einer Getränkedose (1), die mit einem Vorderabschnitt (1f,1b) nach unten eingesetzt wird, wobei diese Getränkedose (1) als Getränk (1a) entweder ein Erfrischungsgetränk für Tiere, oder ein Gesundheitsgetränk oder ein Nährstoffgetränk enthält;
(ii) einen Trinkabschnitt (3;3a,3b) mit offenem oberen Ende (3a), um einem Tier Zugang zu dem Getränk zu erlauben, wenn es von dem Abgabeabschnitt (2) in den Trinkabschnitt (3) durch eine Getränke-Kommunikationspassage (7,7a), vorzugsweise einen Kanal (7), zwischen dem Abgabe- und dem Trinkabschnitt (2,3), abgegeben wird, **dadurch gekennzeichnet, dass** der Abgabeabschnitt eine im wesentlichen zylindrische Form hat, die nach oben offen ist, wenigstens eine untere Stütze (12,13), und eine Öffnungseinrichtung (8;8b,8c,8e;8*) mit einer Klinge hat, die zum Durchschneiden nur eines Teils eines Deckels (1b) des Vorderabschnitts (1f,1b) der Dose geeignet ist.

2. System nach Anspruch 1, wobei der Abgabeabschnitt (2) einen Aufnahmeabschnitt (4) hat, der zur Aufnahme einer zylindrischen Getränkedose (1) mit nicht mehr als deren vorderem Endabschnitt (1f,1b) ausgebildet ist, vorzugsweise mit nicht mehr als 50%, besonders bevorzugt 30% einer axialen Höhe der Getränkedose.

3. System nach Anspruch 1, welches zumindest eine teilweise kreisförmige (kreisrunde) Schneidevorrichtung hat, die aufwärts gerichtet ist.

4. System nach Anspruch 1, wobei der Abgabeabschnitt (2) eine aufwärts (nach oben) gerichtete Schneidevorrichtung (8) zum Schneiden durch einen Teil eines Deckels, einen einen Sockel (8e) der Schneidevorrichtung beherbergenden Stützabschnitt (6e), und eine als Puffer fungierende Auffangkammer (6) für eine abgegebene Flüssigkeitsmenge aufweist.

5. System nach Anspruch 4, wobei der kommunizierende Verbindungsgang (7,7a) von der als Puffer fungierenden Auffangkammer (6) zu dem Trinkabschnitt (3) bereitgestellt wird.

6. System nach Anspruch 1 oder 4, wobei der Abgabeabschnitt eine im wesentlichen zylindrische Form (4) hat, deren Durchmesser, bezogen auf eine zylindrische Getränkedose, so angepasst ist, dass ein Zwischenraum/Spalt (11,7a) zum Zuführen von Luft in die Nähe einer Unterseite des Abgabeabschnitts (4), vorzugsweise in die als Puffer fungierende Aufnahmekammer (6), verbleibt.

7. System nach Anspruch 1 oder 6, wobei der Abgabeabschnitt eine im wesentlichen zylindrische Form (4) hat, deren Durchmesser mit Bezug auf eine zylindrische Getränkedose so angepasst ist, dass ein zumindest teilweise ringförmiger oder umfänglicher Spalt (11) zwischen der zylindrisch geformten Innenwand des Abgabeabschnitts (4) und einer Wand (1e) der Getränkedose verbleibt, wenn diese in den Abgabeabschnitt eingesteckt wird.

8. System nach Anspruch 1 oder 6, wobei der Abgabeabschnitt eine im wesentlichen zylindrische Form (4) hat, deren Durchmesser mit Bezug auf eine zylindrische Getränkedose dimensioniert ist, und ein Graben (7a) als Durchgang oder Zwischenraum (11) zwischen dem Abgabeabschnitt (4) und dem das offene Oberteil (3a) umfassenden Trinkabschnitt (3;3a,3b) bereitgestellt ist, damit Getränk in die eine Richtung fließt und Luft in die Gegenrichtung strömt oder um einen Getränkefluss in die eine Richtung und Luftstrom in die Gegenrichtung zu liefern.

9. System nach Anspruch 1 oder 2 oder 6, wobei der Abgabeabschnitt zumindest einen seitlichen Halteabschnitt (4,4a,4b) aufweist, der vorzugsweise radial nach innen zeigt, zum seitlichen Stützen und Halten der eingestellten Position der Getränkedose, nachdem diese in den Aufnahmeabschnitt (4) des Abgabeabschnitts (2) eingesetzt wurde.

10. System nach Anspruch 3, worin die Stütze oder Halterung (12,13) einen Stützring (12a,12b) oder mehrere in Umfangsrichtung angeordnete, hervorspringende Stifte oder Bolzen (13;13a,13b,13c) umfasst.

11. System nach Anspruch 1, mit einer zumindest teilweise kreisförmigen Schneidevorrichtung (8;8*) mit zwei Abschnitten, zum Durchschneiden eines relativ kleinen Teils (1b') des Deckels, wobei das Element umfasst
(a) ein Klingenteil (8c), das sich schräg von einem oberen Abschnitt (8b) der Schneidevorrichtung erstreckt;
(b) ein nicht schneidender, verbleibender Abschnitt (8d) unterhalb des Klingenteils, der ein relativ stumpfes oberes Ende hat, um den Deckelteil nach oben zu drücken und ihn in das Innere der Dose zu biegen, während eines Teils einer Abwärtsbewegung der Dose, bis sie auf einer Halterung bzw. Unterlage (12,13) ruht.

12. System nach Anspruch 1, worin der Abgabeabschnitt (2;4,6,12,13) eine untere Wand (6b) und eine daraus in Aufwärtsrichtung hervorstehende Öffnungsvorrichtung (8) hat.

13. System nach Anspruch 12, wobei die Öffnungsvorrichtung (8) eine wenigstens teilweise gebogene Klinge (8c) umfasst, und diese Klinge sich geneigt oder schräg von einem Spitzenabschnitt (8b) nach unten erstreckt.

14. System nach Anspruch 13, wobei der Neigungswinkel (α) der geneigten bzw. schrägen Klinge sich von einem kleinen Winkel zu einem großen Winkel verändert, und der Winkel sich auf eine Achse (100) der wenigstens teilweise rohrförmigen Öffnungsvorrichtung (8) bezieht.

15. System nach Anspruch 14, worin der große Neigungswinkel im Bereich von 60° bis 80° liegt.

16. System nach Anspruch 14, worin der kleine Winkel (α) im Bereich von 10° bis 30° liegt.

17. System nach Anspruch 14, worin die Veränderung des Neigungswinkels der Klinge (8b,8c) im Wesentlichen weich oder fließend ist.

18. System nach Anspruch 13, wobei ein unterer Abschnitt (8d) die Klinge enden lässt und einen Schneideabschnitt (8c) von einem Abreißabschnitt (8d) der Öffnungsvorrichtung (8) absetzt.

19. System nach Anspruch 11, wobei die Öffnungsvorrichtung (8,8*) zum Öffnen des kleinen Teils (1 b') geformt und angepasst ist, wobei 20% bis 3%, vorzugsweise um im wesentlichen 5% herum, des Bereichs zur Aufnahme des vorderen Endabschnitts (1f, 1b) der Getränkedose (1) von einem vertikalen Wandsegment (4) des Abgabeabschnitts umgeben sind.

20. System nach Anspruch 13, wobei die Öffnungsvorrichtung (8,8*) nicht mehr als eine teilweise umfängliche Klinge als oberste Schneidkante eines im Wesentlichen rohrförmigen Schafts der Vorrichtung (8) aufweist.

21. System nach Anspruch 12 oder 3, wobei die untere Halterung bzw. Unterlage (12,13) obere Stoppkanten oder obere Flächen auf einer ersten Ebene (L) aufweist, die höher ist als eine zweite Ebene (L0) einer unteren Wand (3a) des Trinkabschnitts (3).

22. System nach Anspruch 3 oder 12, wobei die Öffnungsvorrichtung zumindest ein seitliches Fenster (8a) unterhalb des Klingenabschnitts (8c) hat, zur Versorgung eines Aufnahmeraums (6) unterhalb einer Ebene des oberen Endes der unteren Unterlage (12,13) mit aus einem teilweise geöffneten Deckel austretender Flüssigkeit.

23. System nach dem vorhergehenden Anspruch, wobei das seitliche Fenster (8a) sich oberhalb und unterhalb der Position des oberen Endes der Stütze (12,13) erstreckt, um einem Raum (6) Fluid zuzuführen, der als der Aufnahmeraum zwischen dem Dosendeckel (1 b) - wenn eingesteckt - und der unteren Wand (6b) des Abgabeabschnitts bereitgestellt ist.

24. System nach Anspruch 22, wobei der Aufnahmeraum (6) sich durch den Durchgang oder die Passage (7,7*) hindurch fortsetzt, um das aus einem teilweise geöffneten Deckel austretende Fluid dem Trinkabschnitt (3) zuzuführen, auf einer niedrigeren Ebene als die Ebene des oberen Endes der Stütze (12,13) für eine Naht (10) der eingesetzten Dose.

25. System nach Anspruch 12, wobei der Abgabeabschnitt weiterhin einen Aufnahmeraum (6) nahe der Wand (6b) am unteren Ende hat, zur Aufnahme von Fluid, das von aus einem teilweise geöffneten Dosendeckel (1b) austritt.

26. System nach Anspruch 25, wobei die untere Wand (6b) zum Durchgang (7,7*) zwischen dem Abgabe- und dem Trinkabschnitt (2,3) hin schräg abfällt.

27. System nach Anspruch 1, mit einer ablösbaren Haube (5), die in einer geschlossenen Position sowohl den Abgabeabschnitt als auch den Trinkabschnitt umgibt und abdeckt.

28. System nach Anspruch 27, wobei die Haube einen Griff (5a) hat.

29. System nach Anspruch 3, 4, 11 oder 12, wobei die Öffnungsvorrichtung (8,8*) zumindest zum Teil aus Metall oder Keramik hergestellt ist.

30. System nach Anspruch 10 oder 29, wobei die Öffnungsvorrichtung (8,8*) zumindest abschnittweise geneigt zuläuft (ϕ) oder eine geneigte Wand hat, die zu einer Achse (100) der Öffnungsvorrichtung hin geneigt ist, die **dadurch** an einer Basis (8e) einen größeren Durchmesser hat als an einem Oberteil (8b), vorzugsweise mit einem Kegelwinkel von zwischen 3° und 10° zur Achse.

31. System nach Anspruch 30, wobei die Vorrichtung (8,8*) einen im Wesentlichen vertikal ausgerichteten Schlitz (8g) aufweist, der zur Spitze (8b) hin schmaler wird bzw. sich verjüngt.

32. System nach Anspruch 31, wobei der sich verjüngende Schlitz (8g) eine maximale Breite von zwischen 3 mm und 5 mm hat.

33. System nach Anspruch 1, wobei die zwei Abschnitte (3,2) des Systems zumindest zum Teil aus lackiertem Stahl, rostfreiem Stahl, Aluminium oder Kunststoff bestehen.

34. System nach den Ansprüchen 1 oder 5, wobei die Kommunikationspassage als Graben (7a) ausgebildet ist, nach oben hin offen ist und eine geschlossene untere Bahn hat.

35. System nach den Ansprüchen 1, 6 oder 34, mit einer Luftzuführung (7a,11), die ausgebildet ist, in einem Zustand des Napfsystems Luft in den Abgabeabschnitt und in eine eingesetzte, geöffnete Dose (1,1b') hinein zu leiten, und in einem zweiten Zustand des Napfsystems die Luftzuführung anzuhalten.

## Revendications

1. Système de récipient servant à boire pour animaux, ledit système ayant :
(i) une partie distributrice de boisson à réglage de niveau (2;4,12,13,6), conçue pour recevoir une boîte de boisson (1) insérée avec une partie d'extrémité frontale (1f, 1b) vers le bas, ladite boîte de boisson (1) contenant comme boisson (1a) une boisson choisie parmi un rafraîchissement pour animal, une boisson de santé et une boisson nutritive ;
(ii) une partie à boire (3;3a,3b) comprenant un sommet ouvert (3a) pour permettre à un animal d'accéder à la boisson lorsqu'elle est distribuée par ladite partie distributrice (2) dans ladite partie servant à boire (3) à travers un passage de communication de boisson (7,7a), de préférence un canal (7), entre la partie distributrice et la partie servant à boire (2,3), **caractérisé en ce que** la partie distributrice a une forme sensiblement cylindrique ouverte vers le sommet, au moins un support inférieur (12,13) et ayant un dispositif d'ouverture (8;8b,8c,8e;8*) avec une lame permettant de ne découper qu'une partie d'un couvercle (1b) de la partie d'extrémité frontale (1f,1b) de la boîte.

2. Système selon la revendication 1, dans lequel la partie distributrice (2) a une partie réceptrice (4) permettant de recevoir une boîte cylindrique de boisson (1) sur pas plus de sa partie d'extrémité frontale (1f,1b), de préférence pas plus de 50 %, en particulier 30 % d'une hauteur axiale de la boîte de boisson.

3. Système selon la revendication 1, ayant un dispositif de coupe au moins en partie circulaire dirigé vers le haut.

4. Système selon la revendication 1, dans lequel la partie distributrice (2) a un dispositif de coupe (8) dirigé vers le haut pour découper une partie d'un couvercle, une partie de support (6e) logeant une base (8e) dudit dispositif de coupe et une chambre tampon réceptrice (6) pour une quantité délivrée de la boisson.

5. Système selon la revendication 4, dans lequel le passage de communication (7,7a) est ménagé de la chambre tampon réceptrice (6) à ladite partie à boire (3).

6. Système selon la revendication 1 ou 4, dans lequel la partie distributrice a une forme sensiblement cylindrique (4) ayant un diamètre adapté par rapport à une boîte de boisson cylindrique pour laisser un intervalle (11,7a) pour acheminer de l'air à proximité d'un fond de la partie distributrice (4), de préférence dans la chambre tampon réceptrice (6).

7. Système selon la revendication 1 ou 6, dans lequel la partie distributrice a une forme sensiblement cylindrique (4) de diamètre adapté par rapport à une boîte de boisson cylindrique pour laisser un intervalle (11) au moins en partie circonférentiel entre la paroi interne de forme cylindrique de la partie distributrice (4) et une paroi (1e) de la boîte de boisson, lorsqu'elle est insérée dans la partie distributrice.

8. Système selon la revendication 1 ou 6, dans lequel ladite partie distributrice a une forme sensiblement cylindrique (4) au diamètre adapté par rapport à une boîte de boisson cylindrique, et une rigole (7a) est ménagée comme passage ou intervalle (11) entre la partie distributrice (4) et la partie servant à boire (3;3a,3b) comprenant le sommet ouvert (3a) pour acheminer le flux de boisson dans un sens et l'écoulement d'air dans le sens opposé.

9. Système selon la revendication 1, 2 ou 6, dans lequel ladite partie distributrice a au moins une partie de soutien latérale (4,4a,4b), de préférence faisant face radialement vers l'intérieur, pour supporter et maintenir latéralement la position ajustée de la boîte de boisson après qu'elle a été insérée dans la partie réceptrice (4) de la partie distributrice (2).

10. Système selon la revendication 3, dans lequel ledit support (12,13) comprend un anneau de support (12a,12b) ou plusieurs goujons saillants (13;13a,13b,13c) espacés sur la circonférence.

11. Système selon la revendication 1, ayant un dispositif de coupe au moins en partie circulaire (8;8*) avec deux parties pour couper une partie relativement petite (1b') du couvercle, le dispositif comprenant :
(a) une partie de lame (8c) s'étendant en oblique d'une partie supérieure (8b) du dispositif de coupe ;
(b) une partie restante non coupante (8d) située en dessous de la partie de lame et ayant une extrémité supérieure relativement émoussée, pour pousser la partie de couvercle vers le haut et la fléchir à l'intérieur de la boîte, au cours d'une partie d'un mouvement descendant de la boîte, jusqu'à ce qu'elle repose sur un support (12,13).

12. Système selon la revendication 1, dans lequel ladite partie distributrice (2;4,6,12,13) a une paroi de fond (6b) et un dispositif d'ouverture (8) qui en fait saillie en direction ascendante.

13. Système selon la revendication 12, dans lequel ledit dispositif d'ouverture (8) comprend une lame au moins en partie incurvée (8c), ladite lame s'étendant en oblique d'une partie de pointe (8b) vers le bas.

14. Système selon la revendication 13, dans lequel l'angle d'inclinaison (α) de la lame oblique passe d'un petit angle à un grand angle, l'angle se référant à un axe (100) dudit dispositif d'ouverture au moins en partie tubulaire (8).

15. Système selon la revendication 14, dans lequel ledit grand angle d'inclinaison se situe dans la plage de 60° à 80°.

16. Système selon la revendication 14, dans lequel ledit petit angle (α) se situe dans la plage de 10° à 30°.

17. Système selon la revendication 14, dans lequel ladite variation d'angle d'inclinaison de ladite lame (8b,8c) est sensiblement régulière.

18. Système selon la revendication 13, dans lequel une partie inférieure (8d) termine la lame et dégage une partie coupante (8c) d'une partie de déchirure (8d) dudit dispositif d'ouverture (8).

19. Système selon la revendication 11, dans lequel ledit dispositif d'ouverture (8,8*) est moulé et conçu pour ouvrir la petite partie (1b') ayant 20 % à 3 %, de préférence environ sensiblement 5 %, de la surface entourée par un segment de paroi vertical (4) de la partie distributrice, pour recevoir la partie d'extrémité frontale (1f,1b) de la boîte de boisson (1).

20. Système selon la revendication 13, dans lequel ledit dispositif d'ouverture (8, 8*) ne comprend pas plus d'une lame en partie circonférentielle comme bord de coupe supérieur d'un arbre sensiblement tubulaire du dispositif (8).

21. Système selon la revendication 12 ou 3, dans lequel ledit support inférieur (12,13) a des bords d'arrêt supérieurs ou des surfaces supérieures ménagé(e)s à un premier niveau (L) plus élevé qu'un second niveau (L0) d'une paroi inférieure (3b) de ladite partie servant à boire (3).

22. Système selon la revendication 3 ou 12, dans lequel ledit dispositif d'ouverture a au moins une fenêtre latérale (8a) en dessous de la partie de lame (8c) pour acheminer le liquide sortant d'un couvercle en partie ouvert à un plénum (6) en dessous d'un niveau d'extrémité supérieur du support inférieur (12,13).

23. Système selon la revendication précédente, dans lequel ladite fenêtre latérale (8a) s'étend au-dessus et au-dessous du niveau d'extrémité supérieur dudit support inférieur (12,13) pour délivrer du liquide à un espace (6) formé par le plénum entre le couvercle (1b) de la boîte - lorsqu'il est inséré - et la paroi inférieure (6b) de la partie distributrice.

24. Système selon la revendication 22, dans lequel le plénum (6) se poursuit à travers le passage (7,7*) pour délivrer le liquide sortant d'un couvercle partiellement ouvert à ladite partie servant à boire (3) à un niveau inférieur au niveau d'extrémité supérieur dudit support (12,13) pour une jonction (10) de la boîte insérée.

25. Système selon la revendication 12, dans lequel ladite partie distributrice présente en outre un plénum (6) à proximité de la paroi d'extrémité inférieure (6b) pour recevoir du liquide sortant d'un couvercle de boîte en partie ouvert (1b).

26. Système selon la revendication 25, dans lequel ladite paroi inférieure (6b) est inclinée vers le passage (7,7*) entre lesdites parties distributrice et servant à boire (2,3).

27. Système selon la revendication 1, ayant un capot détachable (5), entourant et recouvrant en position fermée à la fois la partie distributrice et la partie servant à boire.

28. Système selon la revendication 27, dans lequel ledit capot a une poignée (5a).

29. Système selon la revendication 3, 4, 11 ou 12, dans lequel ledit dispositif d'ouverture (8,8*) est fabriqué au moins en partie en métal ou en céramique.

30. Système selon la revendication 10 ou 29, dans lequel ledit dispositif d'ouverture (8,8*) est au moins en partie conique (φ) ou a une paroi oblique, inclinée vers un axe (100) dudit dispositif d'ouverture, pour avoir un diamètre plus grand à sa base (8e) qu'à son sommet (8b), ayant de préférence un angle de conicité de 3° à 10° par rapport à l'axe.

31. Système selon la revendication 30, le dispositif (8,8*) ayant une fente orientée sensiblement verticalement (8g) se rétrécissant ou s'amincissant vers le sommet (8b).

32. Système selon la revendication 31, la fente amincie (8g) ayant une largeur maximale entre 3 mm et 5 mm.

33. Système selon la revendication 1, dans lequel les deux parties (3,2) du système sont fabriquées au moins en partie en acier peint, en acier inoxydable, en aluminium ou en matériau synthétique.

34. Système selon la revendication 1 ou 5, le passage de communication étant façonné comme une rigole (7a) ouverte vers le haut et ayant un trajet de fond fermé.

35. Système selon les revendications 1, 6 ou 34, ayant une alimentation en air (7a,11) conçue pour acheminer de l'air dans la partie distributrice et dans une boîte insérée ouverte (1,1b') dans un premier état du système de récipient et pour arrêter l'alimentation en air dans un second état du système de récipient.
